# EUROPEAN PATENT SPECIFICATION

(11) **EP 4 028 191 B1**
(45) Date of publication and mention of the grant of the patent: **12.07.2023**
(21) Application number: 20768049.7
(22) Date of filing: 10.09.2020
(51) Int. Cl.: B23F 5/16, B23F 15/00

(54) **METHOD FOR MANUFACTURING A STEPPED GEAR MADE FROM ONE WORKPIECE**
VERFAHREN ZUM HERSTELLEN EINES STUFENGETRIEBES, DAS AUS EINEM WERKSTÜCK HERGESTELLT IST
PROCÉDÉ DE FABRICATION D'ENGRENAGE ÉTAGÉ COMPOSÉ D'UNE SEULE PIÈCE

(30) Priority: 11.09.2019 NL 2023814
(43) Date of publication of application: 20.07.2022
(73) Proprietor: VCST Industrial Products BVBA, 3800 Sint-Truiden (BE)
(72) Inventor: WILLEMS, Yves, 3321 Outgaarden (BE)
(74) Representative: Verhees, Godefridus Josephus Maria
(86) International application number: PCT/EP2020/075387
(87) International publication number: WO 2021/048306

(56) References cited:
- EP-A1- 2 527 072
- EP-A1- 2 898 965
- DE-B- 1 168 741
- US-A- 3 264 940
- US-A1- 2014 206 269
- US-B2- 7 628 091

## Description

### Technical field of the invention

The invention relates to a method for manufacturing a stepped gear wheel, according to the preamble of claim 1 which is known from document EP 2 898 965 A1, having at least two gears wheels with different diameter made from one workpiece, which gear wheels each having an outer circumference and two parallel opposing side faces, which method comprises the step of cutting gear wheel teeth in a part of the workpiece having a smaller diameter than another part of the workpiece, which cutting is performed by means of a cutting tool having a cutting wheel provided with cutting teeth having cutting edges on end faces of the cutting teeth, wherein during cutting both the workpiece and the cutting tool are rotated around their respective centre axes, and wherein depending on the number of teeth to be cut in the relevant part of the rotating workpiece, the rotating cutting tool is positioned relative to the rotating workpiece such that the centre axis of the cutting tool is under an angle to the centre axis of the workpiece.

The angle between centre axis of cutting tool and the centre axis of the workpiece is defined as the cross angle. These two axes are not intersecting each other but crossing each other in space.

Due to the cross angle the cutting edges of the end faces of the cutting teeth during the rotating motion and in a gradual feed of the cutting tool parallel to the centre axis of the workpiece at the point of engagement perform an impact movement in the direction of the gear teeth to be cut. The use of an internal toothed cutting tool will increase the contact ratio between cutting tool and the workpiece and will have a positive effect on the quality of the gear to be made.

### Background of the invention

A shift from Internal combustion Engines (ICE) to Battery Electrical Vehicles (BEV) is ongoing. In the next decade most of the cars will be powered by a combination of an ICE and an electric motor (hybrid vehicle drivetrain). Therefore, future cars will be equipped with more mechanical components to bring the power of both engines to the wheels of the car. This means that weight and downsizing the transmission components will become more and more important. In most of the power trains for BEV, stepped gears are used to reduce the rpm of the electrical engine. These stepped gears should be produced in mono block design for cost and accuracy reasons. For manufacturing reasons a gap is need between the two gears of approximately 10 mm.

A method comparable with the method described in the preamble above but then for manufacturing a common gear wheel instead of a stepped gear wheel is known from DE243514C of which the content is incorporated by reference. Such a method of manufacturing is commonly called skiving. In this known method the cutting tool is like a gear wheel of which the teeth are provided with cutting edges on the end faces of the cutting teeth. In case this known method is used for manufacturing a stepped gear wheel from one single workpiece, there has to be a certain distance between the two gear wheels to create space for the cutting tool when cutting the gear teeth of the small gear wheel to avoid collision of the cutting tool with the larger gear wheel. Also the cross angle between the workpiece and the cutting tool is limited to avoid collision. So the minimum width of the stepped gear wheel produced with the known method will be the sum of the width of the gear wheels and the distance between the gear wheels.

Typical for skiving is the diagonal arrangement of the tool axis to the component axis, known as the shaft angle. This adjustment of the tool, a defined axial feed and the coupled speed of tool and component result in a relative movement which effectively "peels" the tooth space from the component along the main cutting direction.

The skiving operation uses a gear-like cutting tool which receives a gradual feed over the workpiece and a continuous rotational movement in a gear-like engagement with the workpiece. The cutting action is achieved because the axis of the gear-like cutting tool intersects the axis of workpiece at such an angle that cutting end edges of the teeth are lying in a plane inclined to the workpiece axis, which cutting edges at the point of engagement have to fall in the direction of the gaps between the teeth and which cutting edges during the orbital movement of the cutting tool pass through various planes of the gear wheel to be cut, resulting in a shock movement of the individual teeth through the tooth gaps.

Skiving allows continuous operation with continuous engagement of the cutting tool with the workpiece, which results in a significant acceleration of the production.

### Summary of the invention

It is an object of the present invention to provide a method of the type as described in the preamble with which stepped gears can be manufactured having a smaller width than the width of the stepped gear produced according to the known method. To this end in the method according to the invention, as described in independent claim 1, the cutting tool is a ring shaped tool, wherein the cutting teeth being on the inside of the ring shaped tool, and prior to the cutting operation in the side surface of the larger gear wheel of the two gear wheels at the location of the outer circumference of the smaller gear wheel of the two gear wheels, a recess is made to create space for the cutting tool during cutting. For skiving a hollow cutting tool has never been used and a skiving method in which the larger wheel is provided with a recess in the way as described above is not known. By the combination of using a hollow cutting tool with internal cutting teeth and making a circular recess in the side of the larger gear wheel faced to the smaller gear wheel, a stepped gear wheel having a small width can be produced. Both measures are essential for this.

The method according to the invention will make it possible to produce stepped gear wheels with smaller gaps or even without a gap between the two gear wheels and to reduce size and weight of the stepped gear wheel. Further, the cross angle between the workpiece and the cutting tool can be maximized (performance of the cutting operation is linked with the cross angle).

The method can also be used to increase the cross angle of the cutting tool and the workpiece to maximize the cutting performance of the skiving operation with a given distance of the two gears.

### Brief description of the drawings

The invention will be further elucidated below on the basis of drawings. These drawings show an embodiment of the method according to the present invention. In the drawings:
Figure 1 is a workpiece from which the stepped gear wheel will be made;
Figure 2 is the workpiece provided with a recess to create space for the cutting tool;
Figure 3 is the situation during cutting teeth in the small gear wheel of the stepped gear wheel;
Figure 4 is the stepped gear wheel manufactured according to the cutting operation shown in Figure 3;
Figure 5 is a right side view of Figure 3;
Figure 6 is a left side view of Figure 3; and
Figure 7 is a top view of Figure 3.

### Detailed description of the drawings

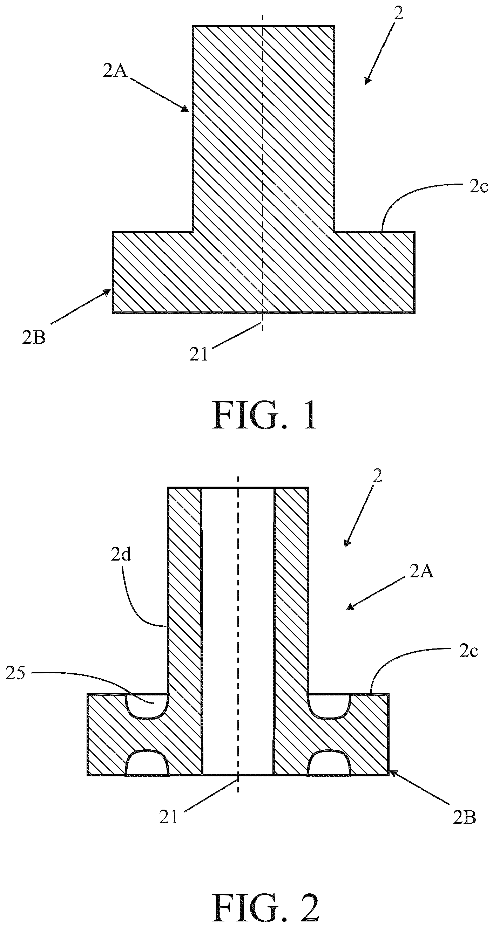

In Figure 1 a workpiece 2 is shown from which a stepped gear wheel will be made. The workpiece has a centre axis 21 and two concentric cylindrical parts 2A and 2B with different diameters. The part 2B with the larger diameter has a side surface 2c facing the part 2A with the smaller diameter.

Prior to the cutting operation, in order to enable the cutting tool 11 to cut the gear teeth 9 on part 2A of the workpiece, a recess is made in the side surface 2c of part 2B to create space for the cutting tool during the subsequent cutting of the teeth in part 2A. Figure 2 shows the workpiece 2 provided with the recess 25. The recess extends along the outer circumference 2d of the part 2A and is width enough for receiving the cutting tool during the cutting operation.

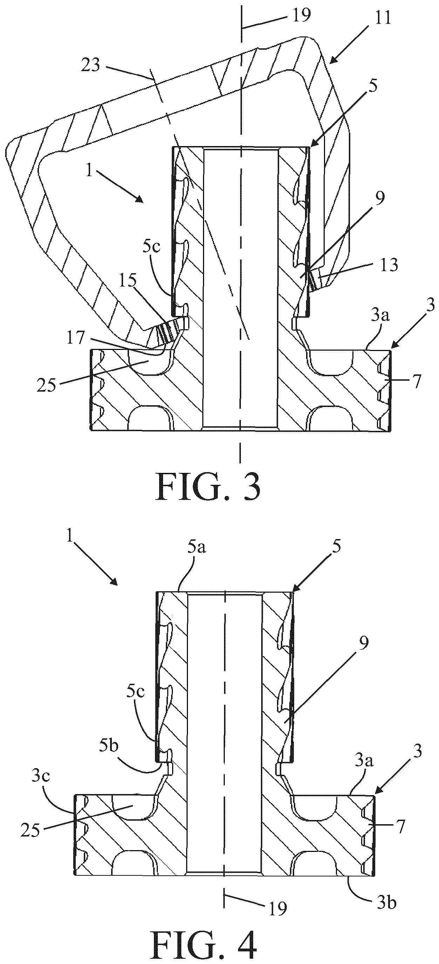

In Figure 3 the situation is shown during cutting gear teeth in part 2A of the workpiece 2. In the situation shown in Figure 3 the part 2B with the larger diameter has already been provided with gear teeth 7 and thus is already a finished gear wheel 3. The teeth 7 have for example been made according the known method. In de part 2A with the smaller diameter gear teeth 9 are being cut to create the smaller gear wheel 5. The gear teeth 9 are being cut by means of a cutting tool 11 having a ring shaped cutting wheel 13 provided with internal cutting teeth 15 on the inside of the ring shaped tool. The end faces of the cutting teeth are provided with cutting edges 17.

During cutting both the stepped gear wheel 1 made from the workpiece and the cutting tool 11 are rotated around their respective centre axes 19 and 23. Depending on the number of teeth to be cut in the smaller gear wheel 5, the rotating cutting tool 11 is positioned relative to the rotating workpiece such that the centre axis 23 of the cutting tool 11 is under an angle to the centre axis 19 of the stepped gear wheel 1 (or centre axis 21 of the workpiece 2) such that the cutting edges 17 of the end faces of the cutting teeth 15 during the rotating motion and in a gradual feed of the cutting tool 11 parallel to the centre axis 19 of the stepped gear wheel 1 (centre axis 21 of the workpiece 2) at the point of engagement perform an impact movement in the direction of the gear teeth 9 to be cut. Because of the previously made recess 25 in the side surface 3a of the larger gear wheel 3 at the location of the outer circumference 5c of the smaller gear wheel 5, space is created for the gear-like hollow cutting tool 11 provided with internal cutting teeth, during cutting.

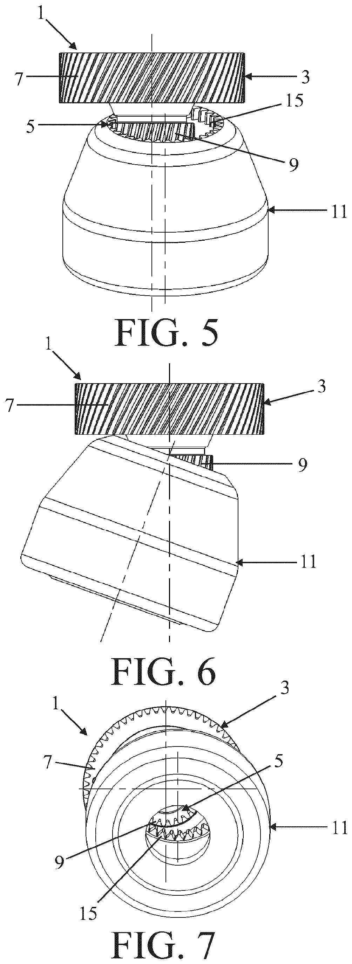

In Figures 5, 6 and 7 the situation during cutting teeth in the small gear wheel of the stepped gear wheel is shown in different views.

In figure 4 the stepped gear wheel manufactured according to the above cutting operation is shown. The stepped gear wheel 1 has two gears wheels 3 and 5 with different diameter made from one workpiece. These gear wheels 3, 5 each having an outer circumference 3c and 5c and two parallel opposing side faces 3a, 3b, 5a and 5b. At the location of the outer circumference 5c of the smaller gear wheel 5 space has been created for the cutting tool during the cutting operation. This space formed by the recess 25 provided in the side surface 3a of the gear wheel 3.

Although the present invention is elucidated above on the basis of the given drawings, it should be noted that this invention is not limited whatsoever to the embodiment shown in the drawings. The invention also extends to all embodiments deviating from the embodiment shown in the drawings within the scope of the invention defined by the appended claim.

## Claims

1. Method for manufacturing a stepped gear wheel (1) having at least two gears wheels (3, 5) with different diameter made from one workpiece (2), which gear wheels (3, 5) each having an outer circumference (3c, 5c) and two parallel opposing side faces (3a, 3b, 5a, 5b), **characterised in that** the method comprises the step of cutting gear wheel teeth (9) in a part (2A) of the workpiece having a smaller diameter than another part (2B) of the workpiece, which cutting is performed by means of a cutting tool (11) having a cutting wheel (13) provided with cutting teeth (15) having cutting edges (17) on end faces of the cutting teeth, wherein during cutting both the workpiece (2) and the cutting tool (11) are rotated around their respective centre axes (21, 23), and wherein depending on the number of teeth to be cut in the relevant part of the rotating workpiece (2), the rotating cutting tool (11) is positioned relative to the rotating workpiece (2) such that the centre axis (23) of the cutting tool (11) is under an angle to the centre axis (21) of the workpiece (2) such that the cutting edges (17) of the end faces of the cutting teeth (15) during the rotating motion and in a gradual feed of the cutting tool (11) parallel to the centre axis (21) of the workpiece (2) at the point of engagement perform an impact movement in the direction of the gear teeth (7, 9) to be cut, wherein the cutting tool (11) is a ring shaped tool, wherein the cutting teeth (15) are on the inside of the ring shaped tool, and, prior to the cutting operation, in the side surface (3a) of the larger gear wheel (3) of the two gear wheels, at the location of the outer circumference (5c) of the smaller gear wheel (5) of the two gear wheels, a recess (25) is made to create space for the cutting tool (11) during cutting of the smaller gear wheel (5).

## Patentansprüche

1. Verfahren zur Herstellung eines Stufenzahnrads (1) mit mindestens zwei Zahnrädern (3, 5) mit unterschiedlichem Durchmesser aus einem Werkstück (2), wobei die Zahnräder (3, 5) jeweils einen Außenumfang (3c, 5c) und zwei parallel gegenüberliegenden Seitenflächen (3a, 3b, 5a, 5b) aufweist, **dadurch gekennzeichnet, dass** das Verfahren den Schritt des Schneidens von Zahnradzähnen (9) in einen Teil (2A) des Werkstücks umfasst, der einen kleineren Durchmesser als ein anderer Teil (2B) des Werkstücks aufweist, wobei das Schneiden mittels eines Schneidwerkzeugs (11) durchgeführt wird, das ein Schneidrad (13) aufweist, das mit Schneidzähnen (15) versehen ist, die Schneidkanten (17) an den Endflächen der Schneidzähne aufweisen, wobei während beim Schneiden sowohl das Werkstück (2) als auch das Schneidwerkzeug (11) um ihre jeweiligen Mittelachsen (21, 23) gedreht werden, und wobei abhängig von der Anzahl der zu schneidenden Zähne im betreffenden Teil des rotierenden Werkstücks (2) das rotierende Schneidwerkzeug (11) relativ zum rotierenden Werkstück (2) so positioniert ist, dass die Mittelachse (23) des Schneidwerkzeugs (11) einen Winkel zur Mittelachse (21) des Werkstücks (2) einschließt, so dass die Schneidkanten (17) der Stirnflächen der Schneidzähne (15) bei der Drehbewegung und bei einem schrittweisen Vorschub des Schneidwerkzeugs (11) parallel zur Mittelachse (21) des Werkstücks (2) an der Eingriffsstelle eine Schlagbewegung in Richtung der zu schneidenden Verzahnung (7, 9) ausführt, wobei das Schneidwerkzeug (11) ein ringförmiges Werkzeug ist, wobei die Schneidzähne (15) auf der Innenseite des ringförmiges Werkzeugs liegen, und, vor dem Schneidvorgang, in die Seitenfläche (3a) des größeren Zahnrades (3) der beiden Zahnräder, an der Stelle des Außenumfangs (5c) des kleineren Zahnrades (5) der beiden Zahnräder eine Aussparung (25) angebracht wird, um beim Schneiden des kleineren Zahnrads (5) Platz für das Schneidwerkzeug (11) zu schaffen.

## Revendications

1. Procédé de fabrication d'une roue dentée étagée (1) comportant au moins deux roues dentées (3, 5) de diamètre différent réalisées à partir d'une même pièce (2), lesquelles roues dentées (3, 5) ayant chacune une circonférence extérieure (3c, 5c) et deux faces latérales opposées parallèles (3a, 3b, 5a, 5b), **caractérisé en ce que** le procédé comprend l'étape consistant à tailler des dents de roue dentée (9) dans une partie (2A) de la pièce ayant un diamètre plus petit qu'une autre partie (2B) de la pièce, laquelle coupe est effectuée au moyen d'un outil de coupe (11) ayant une roue de coupe (13) munie de dents de coupe (15) ayant des arêtes de coupe (17) sur les faces d'extrémité des dents de coupe, dans lequel, pendant couper à la fois la pièce (2) et l'outil de coupe (11) sont mis en rotation autour de leurs axes centraux respectifs (21, 23), et dans lequel, en fonction du nombre de dents à tailler dans la partie concernée de la pièce rotative (2), l'outil de coupe rotatif (11) est positionné par rapport à la pièce à usiner rotative (2) de sorte que l'axe central (23) de l'outil de coupe (11) forme un angle avec l'axe central (21) de la pièce à usiner (2) tel que les arêtes de coupe (17) des faces d'extrémité des dents de coupe (15) pendant le mouvement de rotation et lors d'une avance progressive de l'outil de coupe (11) parallèlement à l'axe central (21) de la pièce (2) à la le point d'engagement effectue un mouvement d'impact dans la direction des dents d'engrenage (7, 9) à tailler, l'outil de coupe (11) étant un outil en forme d'anneau, les dents de coupe (15) se trouvant à l'intérieur de l'anneau outil profilé, et, avant l'opération de coupe, dans la surface latérale (3a) de la plus grande roue dentée (3) des deux roues dentées, à l'emplacement de la circonférence extérieure (5c) de la plus petite roue dentée (5) des deux roues dentées, un évidement (25) est réalisé pour créer de l'espace pour l'outil de coupe (11) lors de la coupe de la plus petite roue dentée (5).
